Europäisches Patentamt

**European Patent Office**

**Office européen des brevets**

(11) Numéro de publication: **0 312 471 B1**

(12) FASCICULE DE BREVET EUROPEEN

(45) Date de publication de fascicule du brevet: **06.10.93**

(51) Int. Cl.5: **C08L 77/00**, C08K 3/02, C08K 9/10, C08K 3/30, C08K 3/34

(21) Numéro de dépôt: **88420342.3**

(22) Date de dépôt: **07.10.88**

(54) **Compositions à base de polyamide ignifuge.**

(30) Priorité: **12.10.87 FR 8714268**

(43) Date de publication de la demande:
**19.04.89 Bulletin 89/16**

(45) Mention de la délivrance du brevet:
**06.10.93 Bulletin 93/40**

(84) Etats contractants désignés:
**AT BE CH DE ES FR GB GR IT LI LU NL SE**

(56) Documents cités:
**EP-A- 0 093 456**
**EP-A- 0 141 763**
**FR-A- 2 332 306**

(73) Titulaire: **RHONE-POULENC CHIMIE**
**25, quai Paul Doumer**
**F-92408 Courbevoie Cédex(FR)**

(72) Inventeur: **Bonin, Yves**
**4, rue du Général de Gaulle**
**F-69530 Brignais(FR)**
Inventeur: **Leblanc, Jack**
**38, avenue Clémenceau**
**F-69230 Saint-Genis-Laval(FR)**

(74) Mandataire: **Trolliet, Maurice et al**
**RHONE-POULENC INTERSERVICES**
**Service Brevets Chimie**
**Centre de Recherches des Carrières**
**B.P. 62**
**F-69192 Saint-Fons Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.6/3.3.1)

**Description**

La présente invention a pour objet de nouvelles compositions à base de polyamide ignifugé au moyen de phosphore rouge destinées notamment à la fabrication d'articles pour les industries électrique et électronique. Plus particulièrement, elle concerne des compositions conduisant à des articles ignifugés présentant un bon compromis de propriétés en particulier en matière de résistance au feu, de résilience, de résistance au cheminement de l'arc et d'aspect de surface.

On sait que l'adjonction de phosphore rouge dans des compositions à base de polyamide permet d'atteindre un degré élevé d'ignifugation.

Dans le brevet américain n° 3.883.475, on a décrit des compositions à base de polyamide ignifugé dans lesquelles on a cherché à inhiber le dégagement de phosphine très toxique, qui se forme à la suite d'une réaction de dismutation du phosphore rouge sous l'action des traces d'eau présentes dans le polymère et de la chaleur élevée nécessaire à sa transformation, par addition dans la composition d'un composé métallique consistant avantageusement dans l'oxyde cuivrique.

Dans le brevet français n° 2.367.100, on a proposé une amélioration consistant à faire appel à de l'oxyde de cadmium à la place du CuO ; l'oxyde de cadmium en plus de son efficacité (au moins égale à celle de CuO) pour inhiber le dégagement de phosphine, conduit en outre à des articles présentant une résistance au cheminement de l'arc (au sens de la norme NF C 26220) particulièrement élevée, égale ou supérieure à 400 volts dans le cas de compositions non chargées et à 375 volts dans le cas de compositions chargées avec plus de 25 % en poids de fibres de verre.

Dans le brevet français n° 2.553.783, on a proposé un produit de remplacement de l'oxyde de cadmium (qui présente une certaine toxicité) consistant dans un composé à base de lanthanide. Avec cet adjuvant, les compositions à base de polyamide ignifugé obtenues conduisent à des articles présentant un compromis de propriétés en particulier en matière d'ignifugation, de résilience et de résistance au cheminement de l'arc qui est meilleur que celui lié à l'emploi de l'oxyde de cadmium.

Cependant, il reste encore à résoudre un problème touchant à l'apparition et au développement, à un degré variable, de taches blanchâtres (exudations blanchâtres) sur la surface des articles ignifugés à l'aide de phosphore rouge, lorsque ces articles sont soumis au double effet d'une température élevée et de l'humidité. Une pareille altération des articles considérés se rencontre par exemple dans les pays tropicaux chauds et humides.

Poursuivant des travaux dans ce domaine de la technique et cherchant en particulier à améliorer encore les compositions ignifugées conformes à l'enseignement du brevet français précité n° 2.553.783, la demanderesse a maintenant trouvé que le phénomène d'apparition et de développement de taches, dont on vient de parler, peut être contrarié, sans inconvénient par ailleurs sur les valeurs des propriétés en matière d'ignifugation, de résilience et de résistance au cheminement de l'arc, en faisant appel à un stabilisant judicieusement choisi consistant dans les mélanges de talc avec du sulfure de zinc et/ou de l'oxyde de zinc.

Plus précisément, la présente invention concerne des compositions à base de polyamide ignifugé au moyen de phosphore rouge et comprenant au moins un composé à base de lanthanide, caractérisées en ce qu'elles comprennent en outre des quantités efficaces d'une part de talc et d'autre part de sulfure de zinc et/ou d'oxyde de zinc.

Les polyamides à ignifuger visés dans la présente invention comprennent : les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone ; les polyaminoacides obtenus soit par homopolycondensation directe d'acide ω-aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de pareils polyamides.

A titre d'illustration des polyamides obtenus par polycondensation de diacides et de diamines, on citera par exemple : le nylon 6,6 (polymère d'hexaméthylènediamine et d'acide adipique), le nylon 6,9 (polymère d'hexaméthylènediamine et d'acide azélaïque), le nylon 6,10 (polymère d'hexaméthylènediamine et d'acide sébacique), le nylon 6,12 (polymère d'hexaméthylènediamine et d'acide dodécanedioïque).

A titre d'illustration des polyaminoacides qui peuvent convenir, on citera : le nylon 4 (polymère d'acide amino-4 butanoïque ou de γ-butyrolactame), le nylon 5 (polymère d'acide amino-5 pentanoïque ou de δ-amylolactame), le nylon 6 (polymère d' ε-caprolactame), le nylon 7 (polymère d'acide amino-7 heptanoïque), le nylon 8 (polymère de capryllactame), le nylon 9 (polymère d'acide amino-9 nonanoïque), le nylon 10 (polymère d'acide amino-10 décanoïque), le nylon 11 (polymère d'acide amino-11 undécanoïque), le nylon 12 (polymère d'acide amino-12 dodécanoïque ou de laurolactame).

A titre d'illustration des copolyamides, on citera par exemple : le nylon 6,6/6,10 (copolymère d'hexaméthylènediamine, d'acide adipique et d'acide sébacique), le nylon 6,6/6 (copolymère d'hexaméthylènediamine, d'acide adipique et de caprolactame).

Les polyamides à ignifuger qui sont tout spécialement visés dans la présente invention sont le nylon 6,6, le nylon 6,10, le nylon 6, le nylon 6,6/6,10 et le nylon 6,6/6.

L'expression "phosphore rouge" au sens de la présente invention désigne les diverses variétés allotropiques colorées du phosphore (phosphore rouge, violet ou noir) commercialisées sous l'appellation de phosphore rouge.

La quantité de phosphore rouge est généralement comprise entre 1 et 30 % en poids par rapport au poids du polyamide à ignifuger . De préférence cette quantité est comprise entre 2 et 15 % en poids. De manière plus préférentielle encore, cette quantité est comprise entre 6 et 12 %. D'une manière générale, il est souhaitable d'utiliser le phosphore rouge sous forme finement divisée, par exemple sous forme de particules de diamètre moyen n'excédant pas 200 $\mu$m et de préférence compris entre 1 et 100 $\mu$m.

Dans le présent mémoire on appellera lanthanide, les métaux de la classification périodique des éléments ayant les numéros atomiques allant de 57 à 71 ainsi que l'yttrium qui possède des propriétés voisines bien qu'ayant un numéro atomique de 39.

L'expression "composé à base de lanthanide" donnée ci-avant signifie :
- un dérivé organique ou inorganique de l'un quelconque des lanthanides : cérium, lanthane, praséodyme, néodyme, prométhium, samarium, europium, gadolinium, terbium, dysprosium, holmium, erbium, ytterbium, thulium, lutétium et yttrium ; l'expression "au moins un composé à base de lanthanide" signifie alors que l'on peut engager, outre un seul dérivé, un mélange de dérivés organiques ou un mélange de dérivés inorganiques ou un mélange de dérivés organiques et inorganiques de l'un quelconque des lanthanides précités ;
- un mélange de dérivés organiques et/ou inorganiques de plusieurs de ces lanthanides ; l'expression "au moins un composé à base de lanthanide" signifie que l'on peut engager, outre un seul mélange, une association de plusieurs mélanges de ce type.

En général, en raison des quantités relatives des composés des divers lanthanides dans les minerais les plus courants, notamment dans la monazite et la bastnaesite, lorsque l'on met en oeuvre un dérivé d'un seul lanthanide, ce dernier est de préférence le cérium, le lanthane, le praséodyme et néodyme. Le cérium et le lanthane sont, parmi ces métaux, les plus abondants et conviennent tout particulièrement bien.

Des mélanges de dérivés de plusieurs lanthanides peuvent aussi être utilisés. Il peut en effet être avantageux de ne pas procéder à la séparation longue et coûteuse de tous les lanthanides présents en relativement faibles quantités dans les minerais couramment traités. En pareil cas, on fait appel généralement aux mélanges suivants :
- mélange de dérivés du cérium et d'un ou plusieurs des autres lanthanides;
- mélange de dérivés de lanthane et d'un ou plusieurs autres lanthanides choisis parmi le praséodyme, le néodyme, le prométhium, le samarium, l'europium, le gadolinium, le terbium, le dysprosium, l'holmium, l'erbium, l'ytterbium, le thulium, le lutétium et l'yttrium ;
- mélange de dérivés du praséodyme et d'un ou plusieurs autres lanthanides choisis parmi le néodyme, le prométhium, le samarium, l'europium, le gadolinium, le terbium, le dysprosium, l'holmium, l'erbium, l'ytterbium, le thulium, le lutétium et l'yttrium ;
- mélange de dérivés du néodyme et d'un ou plusieurs autres lanthanides choisis parmi le prométhium, le samarium, l'europium, le gadolinium, le terbium, le dysprosium, l'holmium, l'erbium, l'ytterbium, le thulium, le lutétium et l'yttrium.

Quand de tels mélanges de dérivés de plusieurs lanthanides sont mis en oeuvre dans les compositions selon l'invention, le cérium et/ou le lanthane et/ou le praséodyme et/ou le néodyme représentent généralement au moins 40 % en moles du total des lanthanides.

Par dérivé organique de lanthanide, on entend plus particulièrement les sels des divers acides carboxyliques, les dérivés métalliques des composés phénoliques, les mercaptides et les chélates des composés $\beta$-dicarbonylés.

Plus précisément, les dérivés organiques de lanthanide sont choisis parmi :
- les sels de lanthanide :
  + des acides aliphatiques monocarboxyliques ayant de 2 à 30 atomes de carbone ou dicarboxyliques ayant de 3 à 30 atomes de carbone, saturés ou comportant une ou plusieurs doubles liaisons éthyléniques, et pouvant comporter 1 ou plusieurs substituants tels que les atomes d'halogènes, les groupements hydroxyles, les groupements alkoxy ayant de 1 à 12 atomes de carbone, les groupements mercapto, les groupements phényle, phénoxy, naphtyle ou cyclohexyle, dont les cycles sont éventuellement substitués par un ou plusieurs atomes d'halogènes, groupements hydroxyles, groupements alkyles ayant 1 à 6 atomes de carbone ou alkoxy ayant 1 à 6 atomes de carbone ;

+ des acides benzoïques, naphtoïque-1, naphtoïque-2, cyclopentane-carboxylique, cyclohexane-carboxylique, cyclopentène-carboxyliques ou cyclohexène-carboxyliques, les parties cycliques de ces acides pouvant comporter un ou plusieurs substituants tels que les atomes d'halogènes, les groupements hydroxyles, les groupements alkyles ayant 1 à 12 atomes de carbone, alkényles ayant 2 à 12 atomes de carbone, alkoxy ayant 1 à 12 atomes de carbone, les groupements phényle, benzyle, phénoxy ou cyclohexyle, les groupements alkoxycarbonyles ayant 2 à 24 atomes de carbone ou alkénoxycarbonyles ayant 4 à 24 atomes de carbone ;

+ des monoesters d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment ;

+ des acide carboxyliques hétérocycliques notamment ceux dérivés de la pyridine, du furanne, du thiophène, du pyrrole et du pyranne, pouvant comporter un ou plusieurs substituants tels que les atomes d'halogènes, les groupements hydroxyles, les groupements alkyles ayant 1 à 12 atomes de carbone, les groupements alkoxy ayant 1 à 12 atomes de carbone, les groupements alkényles ayant 2 à 12 atomes de carbone, les groupements alkoxycarbonyles ayant 2 à 24 atomes de carbone ou alkénoxycarbonyles ayant 4 à 24 atomes de carbone ;

- les phénolates de lanthanide dérivés du phénol, du naphtol-1 ou du naphtol-2, dont les parties cycliques peuvent comporter un ou plusieurs substituants tels que les atomes d'halogènes, les groupements alkyles ou alkoxy ayant 1 à 24 atomes de carbone, alkényles ayant 2 à 24 atomes de carbone, phényle, benzyle, phénoxy ou cyclohexyle ;

- les mercaptides de lanthanide notamment ceux qui dérivent des acides thioglycolique ou thiomalique et de leurs esters d'alkyle, (le radical alkyle ayant 1 à 12 atomes), d'alkényle (le radical alkényle ayant 2 à 12 atomes de carbone), de phényle, de benzyle, de cyclohexyle, d'alcanediol (ayant de 2 à 12 atomes de carbone), de dihydroxybenzène, de dihydroxycyclohexane, les parties cycliques desdits esters pouvant être substituées par un ou plusieurs radicaux alkyles ou alkoxy ayant de 1 à 6 atomes de carbone ;

- les chélates de lanthanide de composés $\beta$-dicarbonylés notamment ceux qui dérivent des composés de formule générale (I) :

$$R_1 - CO - CHR_2 - CO - R_3 \qquad (I)$$

dans laquelle :

- $R_1$ et $R_3$, identiques ou différents, représentent :

+ un groupement alkyle, linéaire ou ramifié, ayant 1 à 36 atomes de carbone, éventuellement substitué par un ou des atomes d'halogènes,

+ un groupement alkényle, linéaire ou ramifié, ayant 3 à 36 atomes de carbone, éventuellement substitué par un ou des atomes d'halogènes,

+ un radical aryle ou un radical aryle portant sur le cycle aromatique un ou plusieurs substituants tels que :

. les radicaux alkyles ayant 1 à 6 atomes de carbone, éventuellement substitués par un ou des atomes d'halogènes,

. les radicaux alkényles ayant 2 à 6 atomes de carbone, éventuellement substitués par un ou des atomes d'halogènes,

. le groupement nitro,

. le groupement - CHO,

. le groupement -COOH,

. les groupements alkoxy ayant 1 à 6 atomes de carbone,

. les groupements -COOR$_4$, R$_4$ étant un radical alkyle ayant 1 à 12 atomes de carbone ou alkényle ayant 2 à 12 atomes de carbone,

. le groupement OH,

. les atomes d'halogènes,

+ un radical aralkyle dont la partie aliphatique comporte de 1 à 12 atomes de carbone et dont la partie cyclique peut comporter un ou plusieurs des substituants indiqués précédemment,

+ un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

+ un enchaînement de plusieurs des radicaux indiqués précédemment,

les différents radicaux aliphatiques précédemment définis pouvant comporter un ou plusieurs atomes d'oxygène -O- ou de soufre -S- ou groupements carbonyles - CO - ou carboxylates - COO - ;

- $R_2$ représente un atome d'hydrogène.

Parmi les dérivés organiques de lanthanide utilisables dans les compositions selon l'invention, on choisit fréquemment, en particulier pour des raisons pratiques ou pour des raisons économiques de disponibilité ou de prix :

- les sels de lanthanide :

+ des acides aliphatiques monocarboxyliques ayant de 6 à 24 atomes de carbone, saturés ou possédant une double liaison éthylénique, et pouvant comporter un ou plusieurs substituants tels que des atomes de chlore, groupements hydroxyles, groupements alkoxy ayant de 1 à 6 atomes de carbone, groupements phényle, phénoxy ou cyclohexyle, ces groupements cycliques étant éventuellement substitués par un ou plusieurs atomes de chlore, groupements hydroxyles, groupements alkyles ou alkoxy ayant 1 à 6 atomes de carbone ;

+ des acides mercaptomonocarboxyliques ayant de 2 à 6 atomes de carbone ou mercaptodicarboxyliques ayant de 3 à 6 atomes de carbone ;

+ des acides benzoïque ou cyclohexane-carboxylique, dont la partie cyclique peut comporter un ou plusieurs substituants tels qu'atomes de chlore, groupements hydroxyles, groupements alkyles ou alkoxy ayant 1 à 6 atomes de carbone ou groupements alkoxycarbonyles ayant 2 à 12 atomes de carbone ;

+ des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyles, groupements mercapto, groupements alkoxy ayant 1 à 6 atomes de carbone ;

- les phénolates de lanthanide dérivés du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle.

A titre d'exemples non limitatifs de dérivés organiques des lanthanides, on peut citer :

- les sels de lanthanide, notamment de cérium, de lanthane, de praséodyme et de néodyme, des acides propionique, hexanoïques, n.octanoïque, éthyl-2 hexanoïque, isooctanoïque, nonanoïques, décanoïques, laurique, stéarique, oléique, ricinoléïque, margarique, tétradécanoïques, hydroxy-12 stéarique, docosanoïques, docosène-13-oïque (acide érucique), chloro-2 décanoïque, octyl-2 décanoïque, hydroxy-2 hexanoïque, thioglycolique, mercaptopropionique, thiomalique, cyclohexyl-6 hexanoïque, benzoïque, phénylacétique, phényl-2 propanoïque, méthyl-2 benzoïque, méthyl-4 benzoïque, phénoxy-2 benzoïque, propyl-4 benzoïque, méthoxy-4 benzoïque, tertiobutyl-4 benzoïque, salicylique, tertiobutyl-5 salicylique, hydroxy-4 méthoxy-3 benzoïque, diméthoxy-3,4 benzoïque, naphtoïque-1, naphtoïque-2, cyclohexane-carboxylique, nicotinique, isonicotinique, méthyl-4 furanne-carboxylique-3, du maléate de monoisooctyle, du maléate de mono(éthoxy-2 éthyle), du phtalate de monobutyle, du thiomalate de monobutyle, du thiomalate de monohexyle ;

- les phénolates de lanthanides, notamment de cérium, de lanthane, de praséodyme et de néodyme des composés phénoliques suivants : phénol, crésols, éthylphénols, xylénols, butylphénols, isopentylphénols, isooctylphénols, tertionnonylphénols, décylphénols, dodécylphénols, tertiooctylphénols, cyclohexyl-4 phénol, phényl-4 phénol, ditertiononylphénols, méthyl-isohexylphénols ;

- les chélates de lanthanides, notamment de cérium, de lanthane, de praséodyme et de néodyme des β-dicétones suivantes : l'heptanedione-2,4 ; la décanedione-2,4 ; la Oéthyl-2 décène-2-dione-6,8 ; la méthyl-2 nonène-2 dione-6,8 ; la stéaroylacétone ; la stéaroyl-1 octanone-2 ; le dioxo-7,9 décanoate d'éthyle ; la benzoylacétone ; l'acétylacétone ; la benzoyl-1 octanone-2 ; la diphényl-1,4 butanedione-1,3 ; la stéaroylacétophénone ; la palmitoylacétophénone ; la benzoyl-1 méthyl-4 pentanone ; le benzoyl-octacosanoyl-méthane ; le paraméthoxybenzoyl-stéaroylméthane ; le dibenzoylméthane ;

- les mercaptides de lanthanides, notamment de cérium, de lanthane, de praséodyme et de néodyme de l'acide thioglicolique, du thioglycolate d'isooctyle, du thioglycolate d'octadécyle, du thioglycolate de benzyle, du thioglycolate de lauryle, du dithioglycolate de cyclohexanediol-1,4, du thioglycolate de tertiobutyl-4 cyclohexyle, de l'acide thiomalique, du thiomalate d'hexyle, du thiomalate d'éthyl-2 hexyle, du thiomalate de dodécyle, du thiomalate de benzyle, du thiomalate de cyclohexyle, du thiomalate de propanediol-1,3, du thiomalate de butanediol-1,4, du thiomalate d'hexanediol-1,6.

Les dérivés organiques des lanthanides, qui ne sont pas directement disponibles, sont préparés par des méthodes classiques, telles que la réaction d'un acide carboxylique ou de son anhydride, d'un composé phénolique, d'un acide mercaptocarboxylique (ou d'un de ses esters) ou d'une $\beta$-dicétone sur un oxyde ou un hydroxyde de lanthanide, ou selon le cas sur un mélange de tels oxydes ou hydroxydes, dans un milieu solvant approprié et en chauffant si nécessaire.

Par dérivé inorganique de lanthanide, on entend plus particulièrement les oxydes, les hydroxydes, les sels d'hydracides minéraux et les sels d'oxyacides minéraux.

Plus précisément, on utilise par exemple comme sels de lanthanide d'hydracides minéraux : les chlorure, bromure, iodure, sulfure, séléniure et tellurure ; comme sels de lanthanide d'oxyacides minéraux : les sulfite, sulfate, sulfonate, nitrite, nitrate, phosphite, phosphate, pyrophosphate, carbonate, perchlorate, antimoniate, arséniate, sélenite, sélenate, vanadate et tungstate.

Parmi les dérivés inorganiques de lanthanide utilisables dans les compositions selon l'invention, on choisit fréquemment, en particulier pour des raisons pratiques ou pour des raisons économiques de disponibilité ou de prix, les oxydes, les chlorures, les sulfates ou les nitrates de lanthanide.

Dans les dérivés de lanthanide utilisés dans les compositions selon l'invention, le lanthanide peut se trouver aux différents degrés d'oxydation qu'il possède éventuellement ; le plus féquemment, il se trouve aux degrés d'oxydatation III ou IV.

Conformément à une mise en oeuvre très préférentielle de la présente invention, on fait appel à une quantité efficace d'au moins un composé à base de lanthanide choisi parmi le stéarate de lanthane III, l'oxyde de lanthane III, le chlorure de lanthane III, le stéarate de cérium III, l'oxyde de cérium IV, le chlorure de cérium III.

La quantité de composé(s) à base de lanthanide mise en oeuvre peut varier dans de très larges limites. Plus précisément, cette quantité est déterminée de manière à apporter de $0,1.10^{-3}$ à $100.10^{-3}$ atome-grammes de métal appartenant au groupe des lanthanides pour 100 g de polyamide. De préférence, cette quantité est déterminée de manière à apporter de $0,2.10^{-3}$ à $30.10^{-3}$ atomes-grammes de métal du groupe des lanthanides pour 100 g de polyamide. De manière plus préférentielle encore, cette quantité est déterminée de manière à apporter de $0,3.10^{-3}$ à $10.10^{-3}$ atome-grammes de métal du groupe des lanthanides pour 100g de polyamide.

Le composé à base de lanthanide peut se présenter sous une forme solide ou pâteuse. Dans le cas d'un composé solide, ce dernier est utilisé en général sous forme de particules de diamètre moyen n'exédant pas 200 $\mu$m et, de préférence, compris entre 0,5 et 100 $\mu$m.

Comme il est indiqué ci-avant, les compositions conformes à la présente invention doivent renfermer en outre des quantités efficaces d'une part de talc et d'autre part de sulfure de zinc et/ou d'oxyde de zinc. Le talc, de formule chimique $Mg_3Si_4O_{10}(OH)_2$, peut appartenir notamment soit à la variété ferrifère, soit à la variété nickélifère. Quant au sulfure de zinc, de formule chimique ZnS,il peut s'agir notamment soit de la variété cristalliséee dans le système cubique (blende), soit de la variété cristallisée dans le système hexagonal (wurtzite). S'agissant de l'oxyde de zinc, de formule chimique ZnO, on peut faire appel notamment à l'oxyde pur préparé artificiellement à partir d'un minerai de zinc sous la forme par exemple du sulfure, du silicate ou du carbonate. Ces composés minéraux sont utilisés en général sous forme de particules de diamètre moyen n'excédant pas là non plus 200 $\mu$m et, de préférence, compris entre 0,1 et 100 $\mu$m.

Quand le composé utilisé (composé à base de lanthanide, talc, ZnS, ZnO) est disponible sous forme anhydre ou sous forme cristallisée avec des molécules d'eau, on préfère mettre en oeuvre le composé anhydre pour éviter tout dégagement d'eau lors de la transformation.

La quantité de talc mise en oeuvre peut varier dans des limites assez larges en fonction du degré de stabilisation souhaité ; plus précisément, cette quantité est comprise entre 0,5 et 5 % en poids par rapport au poids du polyamide contenu dans la composition. La quantité de composé(s) du zinc que l'on utilise peut également varier assez largement ; plus précisément, cette quantité est comprise entre 0,1 et 5 % en poids par rapport au poids du polyamide contenu dans la composition. De manière préférentielle, les quantités de talc et de composé(s) du zinc, prises à l'intérieur des zones de variation précitées, sont déterminées de manière à ce que le rapport :

$$\frac{\text{poids de talc mis en oeuvre}}{\text{poids de composé(s) du zinc mis en oeuvre}}$$

varie entre 1 et 5 et, plus préférentiellement encore, entre 2 et 4.

Les compositions conformes à la présente invention peuvent être préparées par simple mélange des divers constituants de toutes les manières appropriées permettant d'obtenir une composition homogène. De manière préférentielle, on réalise le mélange des divers constituants sous forme de poudre ou de granulés en opérant d'abord à froid un pré-mélange dans un mélangeur classique, puis en homogénéisant ensuite l'ensemble par un malaxage à chaud à une température généralement supérieure à 200°C dans une extrudeuse à une ou plusieurs vis en opérant de préférence l'extrusion sous atmosphère inerte comme par exemple de l'azote ou de l'argon. A l'issue de ce traitement on obtient des joncs qui sont refroidis à l'eau puis découpés en granulés, ces derniers pouvant éventuellement être soumis ensuite à un séchage. Les compositions selon l'invention peuvent être préparées encore en confectionnant un mélange-maître, présenté sous forme de granulés à base d'une partie du polyamide à ignifuger, de phosphore rouge, du composé à base de lanthanide et du couple talc + composé(s) du zinc qui sera mélangé ensuite, avant mise en oeuvre, avec des granulés du reste du polyamide à ignifuger.

Ces compositions ont été définies ci-dessus par leurs constituants essentiels. Il va sans dire que l'on ne sortirait pas du cadre de l'invention en modifiant ces compositions de la manière indiquée ci-après. Ainsi, s'agissant par exemple du phosphore rouge, on peut soit utiliser le phosphore rouge tel quel, soit utiliser, et il s'agit là d'une mesure préférentielle, des particules de phosphore rouge enrobées au moyen d'une pellicule de polymère. Parmi ces polymères, on peut citer notamment : les résines époxy (cf. brevet français n° 2 314 221), des polymères ayant des liaisons insaturées maléiques, fumariques ou allyliques (cf. brevet français n° 2 314 219), des polyesters saturés de point de fusion compris entre 50° et 90°C et de masse moléculaire inférieure à 10 000 (cf. brevet français n° 2 373 575), des polycondensats phénol-formaldéhyde thermoplastiques de type novolaque (cf. brevet français N° 2 344 615), des polycondensats phénol-isobutyraldéhyde thermoplastiques (cf. demande de brevet européen n° 82 106 329.4 publiée sous le numéro 0071788) ; l'emploi des polycondensats phénol-formaldéhyde thermoplastiques constitue une mesure particulièrement préférée pour la mise en oeuvre de la présente invention. La quantité de polymère mise en oeuvre pour enrober le cas échéant les particules de phosphore peut varier entre de larges limites. Généralement cette quantité représente 5 à 50 % du poids total du mélange phosphore rouge/polymère enrobant. A noter que l'on peut utiliser sans inconvénient des quantités de polymère enrobant plus importantes allant jusqu'à représenter 90 % du poids total du mélange phosphore rouge/polymère enrobant.

Par ailleurs, les compositions selon l'invention, quand elles sont destinées par exemple à l'obtention d'objets conformés, peuvent renfermer divers additifs : elles peuvent ainsi contenir des charges renforçantes ou gélifiantes telles que des fibres de verre ou d'amiante, des microbilles de verre, du kaolin, de la silice, des micas, des bentonites, des bentones ou des mélanges de ces espèces. Parmi les charges précitées, les plus couramment utilisées sont les fibres de verre ; ces fibres ont en général un diamètre moyen compris entre 1 et 15 $\mu$m et une longueur comprise entre 2 et 8 mm. Il est avantageux, pour obtenir des articles doués de propriétés mécaniques optimales, d'utiliser des fibres ensimées, par exemple au moyen de résines époxy, de résines polyesters, de résines polyuréthannes ou de résines vinyliques, ces résines étant généralement associées à des agents de pontage du type aminosilane. Les proportions de charges peuvent varier entre par exemple 10 % et 60 % en poids par rapport au poids du polyamide de la composition.

On peut également faire appel à d'autres additifs tels que des lubrifiants, des stabilisants, des agents renforçateurs de chocs, des pigments ou colorants, des agents antistatiques, des agents de cristallisation : ces derniers additifs ainsi que leur emploi sont largement décrits dans la littérature.

Les compositions conformes à l'invention peuvent être transformées en articles finis ou semi-finis par application des techniques habituelles d'injection ou d'extrusion. Un des avantages de ces compositions réside dans le fait que cette transformation qui s'effectue en général à une température de l'ordre de 200 à 320°C ne s'accompagne que d'une très faible émission dans l'atmosphère d'hydrogène phosphoré : celle-ci est en général inférieure à 0,3 ppm et même à 0,1 ppm ; la borne de 0,3 ppm représente la concentration maximale à ne pas dépasser (cf. l'ouvrage Sax, Dangerous properties of industrial materials, 3ème édition, pages 1019 et 1020). Pour des teneurs en phosphore adéquates, les articles obtenus sont résistants au feu et ils ne conduisent pas, sous l'action d'une flamme, à la formation de gouttelettes de matière fondue, éventuellement enflammée. La combustibilité selon le test des "Underwriters Laboratories" UL 94 vertical (pour des éprouvettes d'une épaisseur de 1,6 mm) se situe dans la zone de classement allant de V0 à V1. Les articles obtenus présentent une excellente résistance au cheminement d'arc qui peut être supérieure à 450 volts dans le cas de compositions chargées avec plus de 25 % en poids de fibres de verre. On constate encore que les articles ignifugés obtenus présentent aussi une excellente résilience qui, au départ de compositions chargées avec plus de 25% en poids de fibres de verre, peut atteindre et dépasser 25 kJ/m2 en choc Charpy lisse. Les performances enregistrées en matière d'ignification et de résilience sont en général du même ordre que celles obtenues en absence du couple de stabilisants talc + composé(s) du zinc. Par contre, en ce qui concerne la résistance au cheminement d'arc et la tenue au vieillissement en atmosphère chaude et humide, on constate que les performances enregistrées sont supérieures. En particulier, en ce qui a trait aux exudations blanchâtres qui se manifestent lors du vieillissement des articles ignifugés en atmosphère chaude et humide, on note qu'avec les compositions selon la présente invention, ce phénomène est très nettement contrarié par rapport à ce qui se passe en absence du couple talc + composé(s) du zinc ou avec d'autres systèmes stabilisants de nature différente.

Les compositions ignifugées selon la présente invention conviennent particulièrement bien pour l'obtention d'articles conformés utilisables dans les industries de l'électricité (par exemple industries électrique et électronique, électroménager, radio, automobile). Les caractéristiques de ces compositions permettent également de confectionner des articles par filage et filmage.

Les exemples non limitatifs suivants montrent comment la présente invention peut être mise en oeuvre pratiquement.

Avant de décrire ces exemples, on va montrer à l'aide de l'essai A décrit ci-après quel est le comportement d'une composition témoin comprenant :

- du nylon 6,6,
- du phosphore rouge enrobé au moyen d'un polycondensat phénol-formaldéhyde,
- des fibres de verre,
- du stéarate de cérium III,
- un lubrifiant et un colorant,

en matière d'ignifugation, de résilience, de résistance au cheminement de l'arc et de tenue au vieillissement en atmosphère chaude et humide.


ESSAI A


1. Description des matières premières :

- nylon 6,6 (polymère d'hexaméthylénediamine et d'acide adipique) : il s'agit d'un produit présentant un indice de viscosité de 133 ml/g (déterminé selon la norme ISO R 307, édition de 1977, sur la partie soluble dans l'acide formique à 90 %) ;
- phosphore rouge enrobé : il s'agit d'une composition, qui sera désignée dans la suite par l'expression mélange-maître phosphore, contenant 60 % en poids de phosphore rouge ayant une granulométrie moyenne de 20 à 30 $\mu$m enrobé par 40 % en poids d'un polycondensat phénol-formaldéhyde ayant un point de fusion de 80°C et un poids moléculaires de 800 (résine commercialisée par la Société BAKELITE sous la référence 85 36 29). Cet enrobage est effectué comme suivant : on fait fondre la résine dans un réacteur chauffé à 120°C par la vapeur d'eau et on ajoute le phosphore rouge, lentement, sous atmosphère inerte en montant la température du mélange à 148°C. Le mélange est ensuite coulé sous forme de plaques que l'on casse en fragments sous atmosphère inerte ;
- fibres de verre : il s'agit de fibres courtes ayant un diamètre moyen de 10 $\mu$m et une longueur comprise entre 3 et 6 mm, comportant un ensimage pour polyamide, commercialisées par la Société OWENS CORNING FIBERGLAS sous la référence R 17 BX 1 .
- stéarate de cérium III Ce [(C$_{17}$ H$_{35}$ COO)$_3$ ] : il est utilisé en mélange avec du polysébacate d'éthyleneglycol et du colorant noir (produit commercialisé par la Société NORTON CHIMIE sous la marque Spirit Black B) ; ce mélange, désigné dans la suite par l'expression mélange-maître couleur, contient : 14,38 % en poids de stéarate de cérium III, 45,10 % en poids de polysébacate d'éthylèneglycol et 40,52 % en poids de colorant noir.


2. Contenu de cet essai :

On prépare une composition à partir de :
- 100 parties en poids de nylon 6,6,
- 38,82 parties en poids de fibres de verre,
- 11,80 parties en poids de mélange-maître phosphore (phosphore rouge : 7,08 parties en poids), et
- 4,658 parties en poids de mélange-maître couleur (stéarate de cérium III : 0,669 parties en poids et 0,677.10$^{-3}$ atome-grammes de cérium/100 g de nylon).

3. Mode opératoire général et contrôles effectués :

La composition est préparée de la manière suivante :

On réalise d'abord un pré-mélange à sec, à 25°C, des divers constituants par passage dans un mélangeur de marque Moritz.

Ce pré-mélange est ensuite malaxé à l'état fondu dans une extrudeuse-dégazeuse de marque Prodex comportant une vis de diamère D égal à 65 mm et de longueur égale à 24 D ; la vis utilisée est une vis cylindro-conique ayant un profil adapté pour le travail des polyamides ; de l'argon est introduit en continu dans la trémie d'alimentation de l'extrudeuse-dégazeuse ; l'extrudeuse est equipée par ailleurs d'une filière à deux trous de 5 mm de diamètre ; les conditions de l'extrusion sont les suivantes :

| - température | $310° - 270°C$ |
| - vide | $79,8.10^2$ Pa |
| - vitesse de la vis | 50 tours/min. |

On note la pression matière en bout de vis et le débit matière. Le produit recueilli sous forme de joncs est refroidi par passage dans un bain d'eau froide, puis il est granulé et séché.

Sur la poudre à mouler ainsi obtenue, on détermine la teneur en eau et l'indice de viscosité du nylon 6,6.

Pour déterminer l'indice de viscosité, le temps de dissolution dans l'acide formique, pour obtenir une dissolution complète, est habituellement de 2 heures à 25°C.

On détermine encore l'indice de viscosité du nylon 6,6, mais cette fois, sur éprouvette moulée. Ces éprouvettes sont préparées à l'aide d'une presse à vis de marque DK, type 60. Dans cette presse, les granulés de la poudre à mouler sont fondus à une température de 280°C à 300°C (selon le type d'éprouvette), tandis que le moule est maintenu à une température de 80°C ; la pression d'injection est de 80 MPa à 100 MPa (selon le type d'éprouvette) ; la durée du cycle d'injection est de 17s à 25s (selon le type d'éprouvette).

Sur des éprouvettes moulées dans les conditions indiquées ci-avant, on détermine les autres caractéristiques suivantes :

- la résilience consistant dans la résistance au choc Charpy : elle est mesurée à 23°C sur des éprouvettes lisses de type barreau de 60 x 10 x 4 mm, conditionnées de manière connue en soi à EHO ou EH 50, selon la norme NF T 51 035 ; les résultats sont exprimés en kJ/m2 ;
- la combustibilité selon le test des "Underwriters Laboratories" UL94 vertical, tel que décrit dans le document 9750-1 du Bureau des Normalisations des Matières Plastiques, pour mesurer le degré d'ignifugation ; dimensions des éprouvettes : 127 x 12,7 x 1,6 mm ;
- l'indice de résistance au cheminement d'arc (en abréviation IRC) selon la norme NF C 26 220 ; les mesures sont effectuées sur des éprouvettes de dimensions 50 x 50 x 3 mm ;
- et la tenue du vieillissement en atmosphère chaude et humide, appelée dans ce qui suit : test de tropicalisation.

Le test de tropicalisation est conduit en s'inspirant des conditions de la norme NF T 51181 (cycle d'essai C 3 A). Dimensions des éprouvettes : 100 x 100 x 3 mm. Mode opératoire : les éprouvettes sont disposées verticalement dans un dessicateur de 20 litres contenant 1500 cm3 d'une solution aqueuse d'acide sulfurique renfermant 15 % en poids d'acide pur de manière à obtenir une humidité relative de 93 % ; deux éprouvettes servant de cache sont placées sur la périphérie du dessicateur ; entre les éprouvettes servant de cache, on dispose d'une part deux éprouvettes moulées à partir d'une composition à tester (en l'occurence, celle conforme aux exemples 1 et 2 donnés ci-après) et d'autre part deux éprouvettes moulées à partir d'une composition de référence (en l'occurence, celle conforme au présent essai A) ; le dessicateur est placé ensuite dans une étuve chauffée à 70°C pendant 8 heures, puis le chauffage de l'étuve est arrêté, la porte de l'étuve est ouverte et on laisse refroidir le dessicateur et son contenu dans ces conditions pendant 16 heures ; l'ensemble : chauffage 8 heures à 70°C + refroidissement 16 heures à la température ambiante constitue 1 cycle de vieillissement ; les résultats de l'aspect de surface des éprouvettes sont notés au bout de 9 cycles et de 17 cycles. Notation des résultats : cette notation va de 0 à 10 : le chiffre 0 indique qu'il n'y a pas d'exudation ; le chiffre 10 indique que l'éprouvette est entièrement couverte de taches blanchâtres ; la notation prend en compte l'étendue et l'intensité des exudations blanchâtres.

Par ailleurs, on effectue en cours d'extrusion, à la sortie de la pompe à vide, des prélèvements d'air au moyen d'un tube Draeger CH 31 101 pour rechercher la présence éventuelle d'hydrogène phosphoré.

EP 0 312 471 B1

4. Résultats de l'essai A :

Les résultats obtenus sont rassemblés dans le tableau 1 donné ci-après.

EXEMPLE 1

1. Contenu de cet exemple :

Cette partie expérimentale va permettre de situer le comportement d'une composition à base de polyamide et de fibres de verre, ignifugée au moyen de phosphore rouge enrobé et renfermant du stéarate de cérium III ainsi qu'un lubrifiant et un colorant, dans laquelle on incorpore en outre un mélange de talc et de sulfure de zinc.

Plus précisément, on introduit, dans la composition conforme à celle de l'essai A, des quantités de talc et de sulfure de zinc à raison de :
- s'agissant du talc : 1,66 % en poids par rapport au nylon 6,6 et
- s'agissant du ZnS : 0,51 % en poids par rapport au nylon 6,6.
On a donc préparé la composition obtenue à partir des constituants suivants :
- 100 parties en poids de nylon 6,6,
- 39,54 parties en poids de fibres de verre,
- 11,80 parties en poids de mélange-maître phosphore (phospore rouge : 7,08 parties en poids),
- 4,66 parties en poids de mélange-maître couleur (stéarate de cérium III : 0,670 parties en poids et 0,677.10$^{-3}$ atome-grammes de cérium/100 g de nylon),
- 1,66 parties en poids de talc, et
- 0,51 parties en poids de ZnS.

Dans cet exemple le nylon 6,6, les fibres de verre, le mélange-maître phosphore et le mélange-maître couleur sont identiques aux constituants mis en oeuvre dans l'essai A. S'agissant du talc nouvellement introduit, il s'agit du produit commercialisé par la Société des Talcs de Luzenac sous la dénomination 15 MOO ; la dispersion granulométrique de ce talc est la suivante : 100 % de particules de moins de 15 $\mu$m et 50 % de particules de moins de 5 $\mu$m. S'agissant du ZnS conjointement introduit avec le talc, il s'agit du produit commercialisé par la Société SACHTLEBEN sous la dénomination Sachtolith HD-S ; sa dispersion granulométrique est la suivante : 100 % de particules de moins de 45 $\mu$m, le diamètre moyen étant de 0,3 $\mu$m.

2. Mode opératoire général et contrôles effectués :

La préparation de la composition est opérée de la manière indiquée ci-avant au paragraphe 3 de la description de l'essai A. A noter que les conditions de marche de l'extrusion sont ici les suivantes :

| - température | 310° - 270°C |
| - vide | 79,8.10$^2$ Pa |
| - vitesse de la vis | 68 tours/min. |

S'agissant des contrôles effectués, on détermine les différentes caractéristiques physico-mécaniques mentionnées ci-avant au paragraphe 3 de la description de l'essai A. A noter que pour faire les éprouvettes moulées, on reprend les conditions indiquées au paragraphe 3 de la description de l'essai A.

3. Résultats de l'exemple 1 :

Les résultats obtenus sont rassemblés dans le tableau 1 donné ci-après.

EXEMPLE 2

1. Contenu de cet exemple :

Cette partie expérimentale va permettre de situer le comportement d'une composition à base de polyamide et de fibres de verre, ignifugée au moyen de phosphore rouge enrobé et renfermant du stéarate de cérium III ainsi qu'un lubrifiant et un colorant, dans laquelle on incorpore en outre un mélange de talc et

10

d'oxyde de zinc.

On a préparé la même composition que celle décrite ci-avant à l'exemple 1, paragraphe 1, mais en utilisant cette fois, à la place de 0,51 partie en poids de ZnS, la même quantité de ZnO. Cet oxyde est le produit commercialisé par la Société PROLABO sous l'appellation ZnO-léger ; le diamètre moyen des particules d'oxyde est de 0,1 $\mu$m.

2. Mode opératoire général et contrôles effectués :

On opère exactement comme indiqué ci-avant à l'exemple 1, paragraphe 2.

3. Résultats de l'exemple 2 :

Les résultats obtenus sont rassemblés dans le tableau 1 donné ci-après.

**TABLEAU 1**

| EXEMPLE ESSAI | EXTRUSION | | | POUDRE A MOULER | | | CHOC CHARPY LISSE | | Classement UL94 épaisseur 1,6mm | IRC | | | Tropicalisation | |
| --- | --- | --- | --- | --- | --- | --- | --- | --- | --- | --- | --- | --- | --- | --- |
| | Pression matière bout de vis MPa | Débit matière kg/h | Dégagement PH ppm | Taux phosphore calculé % | Teneur en eau % | Indice de viscosité ml/g | EHO kJ/m2 | EH 50 kJ/m2 | | Voltage V | Erosion mm | Indice de viscosité sur éprouvettes moulées ml/g | 9 cycles | 17 cycles |
| A | ~ 20 | 48 | < 0,2 | 7,08 | 0,17 | 147 | 31 | 24 | V-0 | 375 | 0,2 | 130 | 6 | 9 |
| 1 | ~ 20 | 40 | < 0,1 | 7,08 | 0,16 | 145 | 32 | 31 | V-0 | 475 | 0,1 | 133 | 2 | 4 |
| 2 | ~ 20 | 40 | < 0,2 | 7,08 | 0,16 | 144 | 29 | 23 | V-0/ V-1 | 475 | 0,5 | 132 | 3 | 5 |

12

EP 0 312 471 B1

**Revendications**
**Revendications pour les Etats contractants suivants : AT, BE, CH, DE, FR, GB, GR, IT, LI, LU, NL, SE**

1. Compositions à base de polyamide ignifugé au moyen de phosphore rouge et comprenant au moins un composé à base de lanthanide, caractérisées en ce qu'elles comprennent en outre des quantités efficaces d'une part de talc et d'autre part de sulfure de zinc et/ou d'oxyde de zinc.

2. Compositions selon la revendication 1, caractérisées en ce que la quantité de talc mise en oeuvre est comprise entre 0,5 et 5 % en poids par rapport au poids du polyamide contenu dans la composition et que la quantité de composé(s) du zinc mis en oeuvre conjointement est comprise entre 0,1 et 5 % en poids par rapport à la même référence.

3. Compositions selon la revendication 2, caractérisées en ce que les quantités de talc et de composé(s) du zinc, prises à l'intérieur des zones de variations précitées dans la revendication 2, sont déterminées de manière à ce que le rapport :

$$\frac{\text{poids de talc mis en oeuvre}}{\text{poids de composé(s) du zinc mis en oeuvre}}$$

varie entre 1 et 5.

4. Compositions selon l'une quelconque des revendications 1 à 3, caractérisées en ce que le polyamide est choisi dans le groupe constitué par : les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone ; les polyaminoacides obtenus soit par homopolycondensation directe d'acide $\omega$ -aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de pareils polyamides.

5. Compositions selon l'une quelconque des revendications 1 à 4, caractérisées en ce que le composé à base de lanthanide consiste dans :
   - un dérivé organique ou inorganique de l'un quelconque des lanthanides : cérium, lanthane, praséodyme, néodyme, prométhium, samarium, europium, gadolinium, terbium, dysprosium, holmium, erbium, ytterbium, thulium, lutétium et yttrium ;
   - ou un mélange de dérivés organiques et/ou inorganiques de plusieurs de ces lanthanides.

6. Compositions selon l'une quelconque des revendications 1 à 5, caractérisées en ce que la quantité de composé(s) à base de lanthanide mise en oeuvre est déterminée de manière à apporter de $0,1.10^{-3}$ à $100.10^{-3}$ atome-grammes de métal appartenant au groupe des lanthanides pour 100 g de polyamide.

7. Compositions selon l'une quelconque des revendications 1 à 6, caractérisées en ce qu'elles renferment du phosphore rouge en proportions comprises entre 1 et 30 % en poids par rapport au poids du polyamide à ignifuger.

8. Compositions selon l'une quelconque des revendications 1 à 7, caractérisées en ce que le phosphore rouge se trouve sous forme de particules enrobées au moyen d'une pellicule de polymère.

9. Compositions selon la revendication 8, caractérisées en ce que le polymère d'enrobage est choisi dans le groupe constitué par : les résines époxy, des polymères ayant des liaisons insaturées maléiques, fumariques ou allyliques, des polyesters saturés, des polycondensats phénol-formaldéhyde thermoplastiques, des polycondensats phénol-isobutyraldéhyde.

10. Compositions selon l'une quelconque des revendications 1 à 9, caractérisées en ce qu'elles comprennent, en outre, des fibres de verre en quantité variant de 10 à 60 % par rapport au poids du polyamide

13

de la composition.

11. Objets conformés préparés à partir des compositions selon l'une quelconque des revendications 1 à 10.

**Revendications pour l'Etat contractant suivant : ES**

1. Procédé de préparation de compositions à base de polyamide ignifugé au moyen de phosphore rouge et comprenant au moins un composé à base de lanthanide, consistant à réaliser les étapes suivantes :
   - on réalise d'abord, en opérant en froid, un pré-mélange dans un mélangeur classique du polyamide de base et du phosphore rouge avec au moins un composé à base de lanthanide, ces constituants étant mis en oeuvre sous forme de poudre ou de granulés et leurs quantités étant ajustées dans cette première étape de manière à apporter de 1 à 30% en poids de phosphore rouge par rapport au poids du polyamide à ignifuger et de $0,01.10^{-3}$ à $100.10^{-3}$ atome-gramme de métal appartenant au groupe des lanthanides pour 100 g de polyamide,
   - puis on homogénise ensuite l'ensemble obtenu par malaxage à une température supérieure à 200°C dans une extrudeuse à une ou plusieurs vis, ledit procédé étant caractérisé en ce que les constituants mis en oeuvre dans la première étape comprennent en outre un stabilisant particulier consistant dans le mélange de talc avec du sulfure de zinc et/ou de l'oxyde de zinc, la quantité de talc utilisé étant comprise entre 0,5 et 5 % en poids par rapport au poids du polyamide et la quantité de composé(s) du zinc utilisé(s) conjointement étant comprise entre 0,1 et 5 % en poids par rapport à la même référence.

2. Procédé selon la revendication 1, caractérisé en ce que les quantités de talc et de composé(s) du zinc, prises à l'intérieur des zones de variations précitées dans la revendication 1, sont déterminées de manière à ce que le rapport :

$$\frac{\text{poids de talc mis en oeuvre}}{\text{poids de composé(s) du zinc mis en oeuvre}}$$

varie entre 1 et 5.

3. Procédé selon l'une quelconque des revendications 1 et 2, caractérisé en ce que le polyamide est choisi dans le groupe constitué par : les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone ; les polyaminoacides obtenus soit par homopolycondensation directe d'acide $\omega$ -aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de pareils polyamides.

4. Procédé selon l'une quelconque des revendications 1 à 3, caractérisé en ce que le composé à base de lanthanide consiste dans :
   - un dérivé organique ou inorganique de l'un quelconque des lanthanides : cérium, lanthane, praséodyme, néodyme, prométhium, samarium, europium, gadolinium, terbium, dysprosium, holmium, erbium, ytterbium, thulium, lutétium et yttrium ;
   - ou un mélange de dérivés organiques et/ou inorganiques de plusieurs de ces lanthanides.

5. Procédé selon l'une quelconque des revendications 1 à 4, caractérisé en ce que le phosphore rouge se trouve sous forme de particules enrobées au moyen d'une pellicule de polymère.

6. Procédé selon la revendication 5, caractérisé en ce que le polymère d'enrobage est choisi dans le groupe constitué par : les résines époxy, des polymères ayant des liaisons insaturées maléiques, fumariques ou allyliques, des polyesters saturés, des polycondensats phénol-formaldéhyde thermoplastiques, des polycondensats phénol-isobutyraldéhyde.

7. Procédé selon l'une quelconque des revendications 1 à 6, caractérisé en ce que les constituants mis en oeuvre dans la première étape comprennent en outre des fibres de verre en quantité variant de 10 à 60 % par rapport au poids du polyamide.

**Claims**
**Claims for the following Contracting States : AT, BE, CH, DE, FR, GB, GR, IT, LI, LU, NL, SE**

1. Compositions based on polyamide fireproofed by means of red phosphorus and comprising at least one lanthanide-based compound, characterised in that they additionally comprise effective quantities of, on the one hand, talc and, on the other hand, zinc sulphide and/or zinc oxide.

2. Compositions according to claim 1, characterised in that the quantity of talc employed is between 0.5 and 5% by weight relative to the weight of the polyamide present in the composition and in that the quantity of zinc compound(s) employed jointly is between 0.1 and 5% by weight relative to the same reference.

3. Compositions according to claim 2, characterised in that the quantities of talc and of zinc compound(s), taken within the ranges of variations mentioned above in claim 2, are determined so that the ratio:

$$\frac{\text{weight of talc employed}}{\text{weight of zinc compound(s) employed}}$$

varies between 1 and 5.

4. Compositions according to any one of claims 1 to 3, characterised in that the polyamide is chosen from the group consisting of: polyamides obtained by polycondensation of saturated aliphatic dicarboxylic acids having from 6 to 12 carbon atoms with saturated aliphatic diprimary diamines having from 6 to 12 carbon atoms; polyamino acids obtained either by direct homopolycondensation of $\omega$-aminoalkanoic acid containing a hydrocarbon chain having from 4 to 12 carbon atoms, or by hydrolytic opening and polymerisation of the lactams derived from these acids; copolyamides obtained from the starting monomers for the abovementioned polyamides, it being possible for the acid component of these copolyamides additionally to consist partly of terephthalic acid and/or isophthalic acid; and mixtures of such polyamides.

5. Compositions according to any one of claims 1 to 4, characterised in that the lanthanide-based compound consists of:
   - an organic or inorganic derivative of any one of the lanthanides: cerium, lanthanum, praseodymium, neodymium, promethium, samarium, europium, gadolinium, terbium, dysprosium, holmium, erbium, ytterbium, thulium, lutetium and yttrium;
   - or a mixture of organic and/or inorganic derivatives of a number of these lanthanides.

6. Compositions according to any one of claims 1 to 5, characterised in that the quantity of lanthanide-based compound(s) employed is determined so as to introduce from $0.1 \times 10^{-3}$ to $100 \times 10^{-3}$ gram-atoms of metal belonging to the lanthanide group per 100 g of polyamide.

7. Compositions according to any one of claims 1 to 6, characterised in that they contain red phosphorus in proportions of between 1 and 30% by weight relative to the weight of the polyamide to be fireproofed.

8. Compositions according to any one of claims 1 to 7, characterised in that the red phosphorus is in the form of particles coated by means of a polymer film.

9. Compositions according to claim 8, characterised in that the coating polymer is chosen from the group consisting of: epoxy resins, polymers containing maleic, fumaric or allylic unsaturated bonds, saturated polyesters, thermoplastic phenol-formaldehyde polycondensates and phenol-isobutyraldehyde polycondensates.

**10.** Compositions according to any one of claims 1 to 9, characterised in that they additionally comprise glass fibres in a quantity varying from 10 to 60% relative to the weight of the polyamide of the composition.

**11.** Shaped objects prepared from the compositions according to any one of claims 1 to 10.

**Claims for the following Contracting State : ES**

**1.** Process for the preparation of compositions based on polyamide fireproofed by means of red phosphorus and comprising at least one lanthanide-based compound, consisting in performing the following stages:
- first of all, a premix of the base polyamide and of red phosphorus with at least one lanthanide-based compound is produced in a traditional blender, operating cold, these constituents being employed in the form of powder or of granules and their quantities being adjusted in this first stage so as to introduce from 1 to 30% by weight of red phosphorus relative to the weight of the polyamide to be fireproofed and from $0.01 \times 10^{-3}$ to $100 \times 10^{-3}$ gram-atoms of metal belonging to the lanthanide group per 100 g of polyamide
- and then the mixture obtained is subsequently homogenised by kneading at a temperature above 200°C in a single- or multiscrew extruder, the said process being characterised in that the constituents employed in the first stage additionally comprise a particular stabiliser consisting of a mixture of talc with zinc sulphide and/or zinc oxide, the quantity of talc employed being between 0.5 and 5% by weight relative to the weight of the polyamide and the quantity of zinc compound-(s) employed jointly being between 0.1 and 5% by weight relative to the same reference.

**2.** Process according to claim 1, characterised in that the quantities of talc and of zinc compound(s), taken within the ranges of variations mentioned above in claim 1, are determined so that the ratio:

$$\frac{\text{weight of talc employed}}{\text{weight of zinc compound(s) employed}}$$

varies between 1 and 5.

**3.** Process according to either of claims 1 and 2, characterised in that the polyamide is chosen from the group consisting of: polyamides obtained by polycondensation of saturated aliphatic dicarboxylic acids having from 6 to 12 carbon atoms with saturated aliphatic diprimary diamines having from 6 to 12 carbon atoms; polyamino acids obtained either by direct homopolycondensation of $\omega$-aminoalkanoic acid containing a hydrocarbon chain having from 4 to 12 carbon atoms, or by hydrolytic opening and polymerisation of the lactams derived from these acids; copolyamides obtained from the starting monomers for the abovementioned polyamides, it being possible for the acid component of these copolyamides additionally to consist partly of terephthalic acid and/or isophthalic acid; and mixtures of such polyamides.

**4.** Process according to any one of claims 1 to 3, characterised in that the lanthanide-based compound consists of:
- an organic or inorganic derivative of any one of the lanthanides: cerium, lanthanum, praseodymium, neodymium, promethium, samarium, europium, gadolinium, terbium, dysprosium, holmium, erbium, ytterbium, thulium, lutetium and yttrium;
- or a mixture of organic and/or inorganic derivatives of a number of these lanthanides.

**5.** Process according to any one of claims 1 to 4, characterised in that the red phosphorus is in the form of particles coated by means of a polymer film.

**6.** Process according to claim 5, characterised in that the coating polymer is chosen from the group consisting of: epoxy resins, polymers containing maleic, fumaric or allylic unsaturated bonds, saturated polyesters, thermoplastic phenol-formaldehyde polycondensates and phenol-isobutyraldehyde polycondensates.

7. Process according to any one of claims 1 to 6, characterised in that the constituents employed in the first stage additionally comprise glass fibres in a quantity varying from 10 to 60% relative to the weight of the polyamide.

**Patentansprüche**
**Patentansprüche für folgende Vertragsstaaten : AT, BE, CH, DE, FR, GB, GR, LT, LI, LU, NL, SE**

1. Zusammensetzungen auf Basis von mit rotem Phosphor flammfest gemachtem Polyamid, enthaltend zumindest eine Verbindung auf Lanthanidenbasis, dadurch gekennzeichnet, daß sie außerdem wirksame Mengen einesteils an Talk und anderenteils an Zinksulfid und/oder Zinkoxid enthalten.

2. Zusammensetzungen gemäß Anspruch 1, dadurch gekennzeichnet, daß die eingesetzte Menge des Talks zwischen 0,5 und 5 Gew.-%, bezogen auf das Gewicht des in der Zusammensetzung enthaltenen Polyamids, beträgt, und daß die Menge der gemeinsam eingesetzten Zinkverbindung(en) zwischen 0,1 und 5 Gew.-% unter Zugrundelegung des gleichen Bezugs beträgt.

3. Zusammensetzungen gemäß Anspruch 2, dadurch gekennzeichnet, daß die Mengen des Talks und der Verbindung(en) des Zinks, die innerhalb der in Anspruch 2 angegebenen Variationsbereiche liegen, derart bestimmt sind, daß das Verhältnis

$$\frac{\text{Gewicht an eingesetztem Talk}}{\text{Gewicht der eingesetzten Zinkverbindung(en)}}$$

zwischen 1 und 5 variiert.

4. Zusammensetzungen gemäß einem der Ansprüche 1 bis 3, dadurch gekennzeichnet, daß das Polyamid ausgewählt wird unter: den Polyamiden, erhalten durch Polykondensation von gesättigten aliphatischen Dicarbonsäuren mit 6 bis 12 Kohlenstoffatomen mit gesättigten aliphatischen biprimären Diaminen mit 6 bis 12 Kohlenstoffatomen; den Polyaminosäuren, erhalten entweder durch direkte Homopolykondensation einer ω-Aminoalkansäure mit einer Kohlenwasserstoffkette von 4 bis 12 Kohlenstoffatomen oder durch hydrolytische Öffnung und Polymerisation von Lactamen, die sich von diesen Säuren ableiten; den Copolyamiden, erhalten aus den Ausgangsmonomeren der vorstehenden Polyamide, wobei die saure Komponente dieser Copolyamide außerdem zum Teil aus Terephthalsäure und/oder Isophthalsäure bestehen kann; und den Gemischen der gleichen Polyamide.

5. Zusammensetzungen gemäß einem der Ansprüche 1 bis 4, dadurch gekennzeichnet, daß die Verbindung auf Lanthanidenbasis besteht aus:
   - einem organischen oder anorganischen Derivat irgendeines der Lanthaniden: Cer, Lanthan, Praseodym, Neodym, Promethium, Samarium, Europium, Gadolinium, Terbium, Dysprosium, Holmium, Erbium, Ytterbium, Thulium, Lutetium und Yttrium;
   - oder einem Gemisch von organischen und/oder anorganischen Derivaten mehrerer dieser Lanthaniden.

6. Zusammensetzungen gemäß einem der Ansprüche 1 bis 5, dadurch gekennzeichnet, daß die eingesetzte Menge der Verbindung(en) auf Lanthanidenbasis derart bestimmt wird, daß $0,1 \times 10^{-3}$ bis $100 \times 10^{-3}$ Gramm-Atom eines der Gruppe der Lanthaniden angehörenden Metalls je 100 g Polyamid eingebracht werden.

7. Zusammensetzungen gemäß einem der Ansprüche 1 bis 6, dadurch gekennzeichnet, daß sie roten Phosphor in Anteilen zwischen 1 und 30 Gew.-%, bezogen auf das Gewicht des flammfest zu machenden Polyamids, enthalten.

8. Zusammensetzungen gemäß einem der Ansprüche 1 bis 7, dadurch gekennzeichnet, daß der rote Phosphor in Form von Teilchen vorliegt, die mit einer Polymerenhaut umhüllt sind.

EP 0 312 471 B1

**9.** Zusammensetzungen gemäß Anspruch 8, dadurch gekennzeichnet, daß das Polymere der Umhüllung ausgewählt wird unter: den Epoxyharzen, den Polymeren mit ungesättigten Malein-, Fumar- oder Allylbindungen, den gesättigten Polyestern, den thermoplastischen Phenol-Formaldehyd-Polykondensaten und den Phenol-Isobutyraldehyd-Polykondensaten.

**10.** Zusammensetzungen gemäß einem der Ansprüche 1 bis 9, dadurch gekennzeichnet, daß sie außerdem Glasfasern in variierender Menge von 10 bis 60 Gew.-%, bezogen auf das Gewicht des Polyamids der Zusammensetzung, enthalten.

**11.** Formgegenstände, hergestellt aus den Zusammensetzungen gemäß einem der Ansprüche 1 bis 10.

**Patentansprüche für folgenden Vertragsstaat : ES**

**1.** Verfahren zur Herstellung von Zusammensetzungen auf Basis von mit rotem Phosphor flammfest gemachtem Polyamid, die zumindest eine Verbindung auf Lanthanidenbasis enthalten, bestehend aus der Durchführung der folgenden Stufen:
- man führt zunächst unter Arbeiten in der Kälte eine Vormischung in einem klassischen Mischer von Basispolyamid und rotem Phosphor mit zumindest einer Verbindung auf Lanthanidenbasis durch, wobei diese Bestandteile in Form von Pulvern oder Granulaten eingesetzt werden, und ihre Mengen in dieser ersten Stufe derart eingestellt werden, daß 1 bis 30 Gew.-% roter Phosphor, bezogen auf das Gewicht des flammfest zu machenden Polyamids, und $0,01 \times 10^{-3}$ bis $100 \times 10^{-3}$ Gramm-Atom des der Gruppe der Lanthaniden angehörenden Metalls je 100 g Polyamid eingebracht werden;
- hiernach homogenisiert man dann das erhaltene Material durch Mischen bei einer Temperatur von höher als 200°C in einem Extruder mit einer oder mehreren Schnecken, wobei das Verfahren dadurch gekennzeichnet ist, daß die in der ersten Stufe eingesetzten Bestandteile außerdem einen speziellen Stabilisator umfassen, der aus einem Gemisch von Talk mit Zinksulfid und/oder Zinkoxid besteht, wobei die verwendete Menge des Talks zwischen 0,5 und 5 Gew.-%, bezogen auf das Gewicht des Polyamids, beträgt, und die Menge der gemeinsam verwendeten Zinkverbindung(en) zwischen 0,1 und 5 Gew.-% unter Zugrundelegung des gleichen Bezugs beträgt.

**2.** Verfahren gemäß Anspruch 1, dadurch gekennzeichnet, daß die Mengen des Talks und der Zinkverbindung(en), die innerhalb der in Anspruch 1 angegebenen Variationsbereiche gewählt werden, derart bestimmt werden, daß das Verhältnis

$$\frac{\text{Gewicht des eingesetzten Talks}}{\text{Gewicht der eingesetzten Zinkverbindung(en)}}$$

zwischen 1 und 5 variiert.

**3.** Verfahren gemäß einem der Ansprüche 1 und 2, dadurch gekennzeichnet, daß das Polyamid ausgewählt wird unter: den Polyamiden, erhalten durch Polykondensation von gesättigten aliphatischen Dicarbonsäuren mit 6 bis 12 Kohlenstoffatomen mit gesättigten aliphatischen biprimären Diaminen mit 6 bis 12 Kohlenstoffatomen; den Polyaminosäuren, erhalten entweder durch direkte Homopolykondensation einer $\omega$-Aminoalkansäure mit einer Kohlenwasserstoffkette von 4 bis 12 Kohlenstoffatomen oder durch hydrolytische Öffnung und Polymerisation von Lactamen, die sich von diesen Säuren ableiten; den Copolyamiden, erhalten aus den Ausgangsmonomeren der vorstehenden Polyamide, wobei die Säurekomponente dieser Copolyamide außerdem zu einem Teil aus Terephthalsäure und/oder Isophthalsäure bestehen kann; und den Gemischen der glelchen Polyamide.

**4.** Verfahren gemäß einem der Ansprüche 1 bis 3, dadurch gekennzeichnet, daß die Verbindung auf Lanthanidenbasis besteht aus
- einem organischen oder anorganischen Derivat irgendeines der Lanthaniden: Cer, Lanthan, Praseodym, Neodym, Promethium, Samarium, Europium, Gadolinium, Terbium, Dysprosium, Holmium, Erbium, Ytterbium, Thulium, Lutethium und Yttrium;

18

- oder einem Gemisch organischer und/oder anorganischer Derivate von mehreren dieser Lanthaniden.

5. Verfahren gemäß einem der Ansprüche 1 bis 4, dadurch gekennzeichnet, daß der rote Phosphor in Form von Teilchen vorliegt, die mit einer Polymerenhaut hüllt sind.

6. Verfahren gemäß Anspruch 5, dadurch gekennzeichnet, daß das Polymere der Umhüllung ausgewählt wird unter: den Epoxyharzen, den Polymeren mit ungesättigten Malein-, Fumar- oder Allylbindungen, den gesättigten Polyestern, den thermoplastischen Phenol-Formaldehyd-Polykondensaten und den Phenol-Isobutyraldehyd-Polykondensaten.

7. Verfahren gemäß einem der Ansprüche 1 bis 6, dadurch gekennzeichnet, daß die in der ersten Stufe eingesetzten Bestandteile außerdem Glasfasern in einer Menge enthalten, die von 10 bis 60 %, bezogen auf das Gewicht des Polyamids, variiert.